# EUROPEAN PATENT SPECIFICATION

(11) **EP 4 082 823 B1**
(45) Date of publication and mention of the grant of the patent: **21.10.2026**
(21) Application number: 21889477.2
(22) Date of filing: 01.11.2021
(51) Int. Cl.: B60L 3/00, B60L 58/18, H01M 10/42, H04W 24/08, B60L 58/13, B60L 58/14, B60L 58/15

(54) **BATTERY MANAGEMENT METHOD AND BATTERY SYSTEM USING SAME**
BATTERIEVERWALTUNGSVERFAHREN UND BATTERIESYSTEM DAMIT
PROCÉDÉ DE GESTION DE BATTERIE ET SYSTÈME DE BATTERIE L'UTILISANT

(30) Priority: 05.11.2020 KR 20200146744
(43) Date of publication of application: 02.11.2022
(73) Proprietor: LG Energy Solution, Ltd., Seoul 07335 (KR)
(72) Inventor: LEE, Bokyun, Daejeon 34122 (KR)
(74) Representative: Plasseraud IP
(86) International application number: PCT/KR2021/015529
(87) International publication number: WO 2022/098012

(56) References cited:
- EP-A1- 3 637 577
- JP-A- 2016 143 113
- KR-A- 20080 053 561
- KR-A- 20190 013 647
- KR-A- 20200 010 053
- KR-A- 20200 010 053
- KR-A- 20200 098 071
- US-A1- 2020 083 730

## Description

### [Technical Field]

### CROSS-REFERENCE TO RELATED APPLICATION

This application claims priority to and the benefit of Korean Patent Application No. 10-2020-0146744 filed in the Korean Intellectual Property Office on November 05, 2020.

The present disclosure relates to a battery management method and a battery system using the same.

### [Background Art]

In a wireless battery management system (BMS), a master BMS and a slave BMS transmit and receive data through wireless communication such as radio frequency (RF) communication. Compared to a conventional method in which the master BMS and the slave BMS transmit and receive the data via a wire, the number of communication failures increases, while a restoration rate at which the communication failures are restored to normal is high.

In the conventional wired method, if the communication failure occurs between the slave BMS and the master BMS, which monitor the cell voltage, it is difficult to restore the communication failure to normal. In the communication failure state, since the master BMS cannot know the cell voltage, the master BMS enters a safety mode that opens a relay in order to block the battery system to an external connection within a short time after the communication failure occurs.

However, even in the wireless method as in the conventional wired method, if the master BMS enters the safety mode whenever the communication failure occurs, the stability and marketability of the battery system deteriorates due to the frequent relay opening.

EP3637577 A1 relates to a a battery management system comprising a master and slave BMSs. If a fault is detected by a slave device, this is transmitted to the master which then turns off a relay in response.

### [Disclosure]

### [Technical Problem]

An object of the present invention is to provide a battery management method and a battery system that can reliably diagnose whether a wireless communication failure occurs in a wireless method.

### [Technical Solution]

A management method of a battery system including a plurality of battery packs according to claim 1 is provided in a first aspect.

The determining whether the vehicle is on the road capable of causing the cell overvoltage/low voltage based on the road condition information may include determining that the current position of the vehicle is on a road capable of causing the cell overvoltage/low voltage when the road condition information is any one of a high speed, an uphill road, and a downhill road.

The battery management method may further include deriving the wireless communication failure section from the time when the wireless communication failure occurs to the current time.

The battery management method may further include determining whether the wireless communication failure is maintained if the wireless communication failure section does not reach the first failure confirmation time when the current position of the vehicle is positioned on a road capable of causing the cell overvoltage/low voltage.

The battery management method may further include determining whether the wireless communication failure is maintained if the wireless communication failure section does not reach the second failure confirmation time when the current position of the vehicle is not on a road capable of causing the cell overvoltage/low voltage.

A battery system according to claim 6 is provided in a second aspect.

The master BMS is configured to determine that the current position of the vehicle is on the road capable of causing the cell overvoltage/low voltage when the road condition information is any one of a high speed, an uphill, or a downhill.

The master BMS is configured to derive a wireless communication failure section from the time when the wireless communication failure occurs to the current time.

The master BMS is configured to determine whether the wireless communication failure is maintained if the wireless communication failure section does not reach the first failure confirmation time when the current position of the vehicle is on the road capable of causing the cell overvoltage/low voltage.

The master BMS is configured to determine whether the wireless communication failure is maintained if the wireless communication failure section does not reach the second failure confirmation time when the current position of the vehicle is not on the road capable of causing the cell overvoltage/low voltage.

### [Advantageous Effects]

The wireless method is to provide the battery management method and the battery system that may adjust the time for determining whether the failure occurs in consideration of the situation in which the battery system is used when the wireless communication failure occurs.

### [Description of the Drawings]

FIG. 1 is a view showing a battery system according to an exemplary embodiment and a vehicle equipped with the battery system.
FIG. 2 is a view showing one among a plurality of battery packs shown in FIG. 1.
FIG. 3 is a view showing a master BMS according to an exemplary embodiment.
FIG. 4 is a view showing a failure confirmation time control method according to an exemplary embodiment.

### [Mode for Invention]

Hereinafter, embodiments disclosed in the present specification will be described in detail with reference to the accompanying drawings. In the present specification, the same or similar components will be denoted by the same or similar reference numerals, and an overlapped description thereof will be omitted. The terms "module" and "unit" for components used in the following description are used only in order to easily make a specification. Therefore, these terms do not have meanings or roles that distinguish them from each other in themselves. Further, in describing embodiments of the present specification, when it is determined that a detailed description of the well-known art associated with the present invention may obscure the gist of the present invention, it will be omitted. In addition, the accompanying drawings are provided only in order to allow embodiments disclosed in the present specification to be easily understood and are not to be interpreted as limiting the spirit disclosed in the present specification, and it is to be understood that the present invention includes all modifications, equivalents, and substitutions without departing from the scope and spirit of the present invention.

Terms including ordinal numbers such as first, second, and the like will be used only to describe various components, and are not interpreted as limiting these components. The terms are only used to differentiate one component from other components.

It is to be understood that when one component is referred to as being "connected" or "coupled" to another component, it may be connected or coupled directly to another component or be connected or coupled to another component with the other component intervening therebetween. On the other hand, it is to be understood that when one component is referred to as being "connected or coupled directly" to another component, it may be connected to or coupled to another component without another component intervening therebetween.

It will be further understood that terms "comprise" or "have" used in the present specification specify the presence of stated features, numerals, steps, operations, components, parts, or a combination thereof, but do not preclude the presence or addition of one or more other features, numerals, steps, operations, components, parts, or a combination thereof.

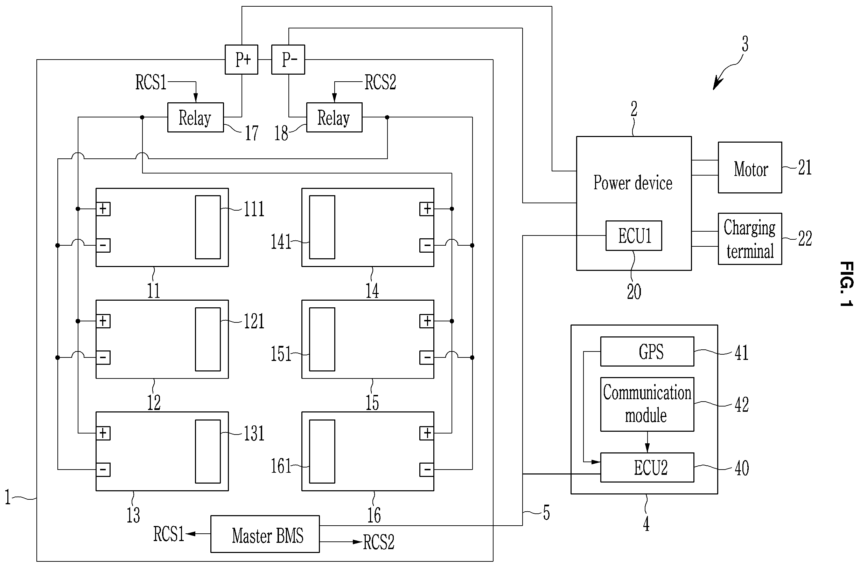

FIG. 1 is a view showing a battery system according to an exemplary embodiment and a vehicle equipped with the battery system.

A power device 2 of a vehicle 3 is connected to two output terminals P+ and P- of a battery system 1. The vehicle 3 may be one of an electric vehicle, a hybrid vehicle, a plug-in hybrid vehicle, and the like, and the power device 2 receives power from the battery system 1 and supplies the power to a motor 21 or may receive the power from a charger connected to a charging terminal 22. When the power device 2 is connected to the charger through the charging terminal 22, the power of the charger may be converted into power suitable for the battery system 1 and supplied it to the battery system 1. The power device 2 includes an electronic control unit (ECU) (ECU1, 20) for controlling the power supply and a charging operation as described above.

The vehicle 3 further includes a navigation device 4 that detects a position of the vehicle, guides a path from a starting position to a destination, or displays traffic information at a current position. The navigation device 4 includes a satellite GPS 41 for determining the position of the vehicle 3, a communication module 42 for requesting and receiving information through wireless communication with a traffic information server, and an electronic control unit (ECU) (ECU2, 40) for controlling the operation of the navigation device 4.

In the battery system 1, six battery packs 11 to 16 are connected in parallel, the output terminal P+ of the battery system 1 is connected to each output terminal (+) of the battery packs 11 to 16 through a relay 17, and the output terminal P- is connected to each output terminal (-) of the battery packs 11 to 16 through a relay 18. One terminal of the relay 17 is connected to each output terminal (+) of the battery packs 11 to 16, the other terminal of the relay 17 is connected to the output terminal P+, one terminal of the relay 18 is connected to each output terminal (-) of the battery packs 11 to 16, and the other terminal of the relay 18 is connected to the output terminal P-.

As shown in FIG. 1, the battery system 1 includes slave battery management systems 111, 121, 131, 141, 151, and 161 of a plurality of battery packs 11 to 16, and a master battery management system 10 connected to the slave battery management systems 111, 121, 131, 141, 151, and 161 with wireless communication, and the two relays 17 and 18. Hereinafter, the slave battery management system is referred to as a slave BMS (Battery Management System), and the master battery management system is referred to as a master BMS.

The master BMS 10 generates relay control signals RCS1 and RCS2 to control the opening and closing of the relay 17 and the relay 18, and the relay 17 and the relay 18 are closed by the relay control signal RCS1 and RCS2 of an on-level.

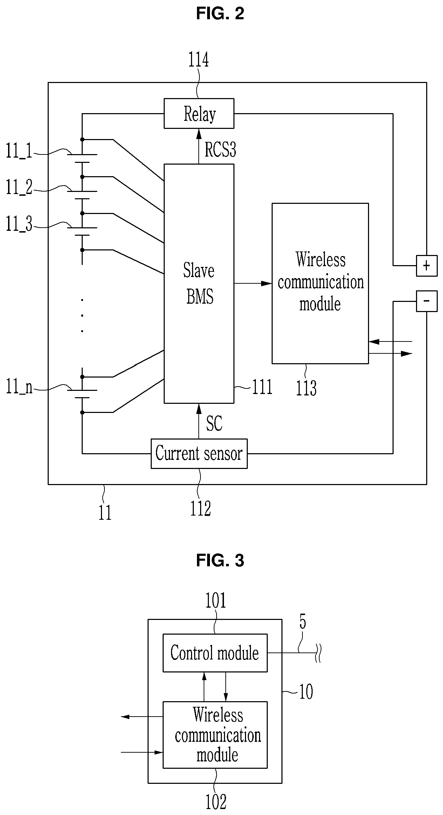

FIG. 2 is a view showing one among a plurality of battery packs shown in FIG. 1.

The structure of the battery pack 11 shown in FIG. 2 may be the same as that of the remaining battery packs 12 to 16.

As shown in FIG. 2, the battery pack 11 includes a plurality of battery cells 11_1 to 11_n (n is a natural number of 2 or more) connected in series, a slave BMS 111, a current sensor 112, a wireless communication module 113, and a relay 114.

The current sensor 112 may detect a current flowing through the battery pack 11 (hereinafter, a battery pack current) and transmit a current detection signal SC indicating the detected battery pack current to the slave BMS 111. In FIG. 2, the current sensor 112 is connected between the negative electrode of the battery pack 11 and the output terminal (-) of the battery pack 11, but unlike one shown in FIG.1, it may be connected between the positive electrode of the battery 11 and the output terminal (+) of the battery pack 11.

The slave BMS 111 measures the cell voltage of a plurality of battery cells 11_1 to 11_n, and transmits information indicating the measured result to the master BMS 10 through the wireless communication module 113. The slave BMS 111 may measure the battery pack voltage of both terminal voltages of the battery pack 11, a temperature (hereinafter, a battery pack temperature) of the battery pack 11, and the like, and transmit a plurality of battery cell voltages along with at least one of the battery pack current, the battery pack voltage, and the temperature of the battery pack 11 to the master BMS 10 through the wireless communication module 113.

The relay 114 is connected between the output terminal (+) of the battery pack and the positive electrode of the battery pack 11, and is opened or closed according to the relay control signal RCS3 of the slave BMS 111. The relay 114 is closed according to the relay control signal RCS3 of the on level, and opened according to the relay control signal RCS3 of the off level.

FIG. 3 is a view showing a master BMS according to an exemplary embodiment.

The master BMS 10 includes a control module 101 and a wireless communication module 102. The master BMS receives the information for at least one of a battery pack current, battery pack voltage, and battery pack temperature along with a plurality of battery cell voltages 10 from each of a plurality of slaves BMS 111, 121, 131, 141, 151, and 161. The information received through the wireless communication module 102 is transferred to the control module 101.

A CAN bus line 5 is connected between the control module 101 and the electronic control units ECU1 and ECU2, so that the control module 101 and the electronic control units ECU1 and ECU2 may transmit and receive the necessary information through the CAN communication. For example, the electronic control unit ECU1 may transmit a signal requesting power supply to the control module 101 through the CAN communication in order to receive the power required for driving the vehicle. In addition, the control module 101 may transmit charging control information to the electronic control unit ECU1 through the CAN communication to control the charging. In addition, the control module 101 requests the information about the current position of the vehicle and the current road condition of the vehicle position (hereinafter, road condition information) to the electronic control unit ECU2, and may transmit the current vehicle position and the road condition information from the electronic control unit ECU2 via the CAN communication to the control module 101 via the CAN communication. The road condition information may include information indicating whether the road of the current position of the vehicle corresponds to a high speed road, an uphill road, a downhill road, a parking lot, a child protection area, near a destination, a low speed limit section, etc..

The control module 101 may differently adjust the failure confirmation time for determining whether a wireless communication failure occurs based on the road condition information. For example, the failure confirmation time is set as the first section for the road condition that may cause an over/low voltage of the cell, and the failure confirmation time is set as the second section for the road condition that does not affect the battery cell. In this case, the first section is shorter than the second section. That is, in the road condition in which the cell does not cause the overvoltage or the low voltage, the control module 101 may set the failure confirmation time to be longer to secure the RF communication restore time without entering the safety mode. Then, the frequent safety mode entry may be prevented.

The control module 101 may control the charge operation and the discharge operation of each of a plurality of battery packs 11 to 16 based on a plurality of cell voltages, the battery pack current, and the battery pack temperature received from each of a plurality of slave BMS 111, 121, 131, 141, 151, and 161. For example, the control module 101 may control the opening of the relay 114 based on a plurality of cell voltages received during the charging or the discharging, and transmit a control signal for opening the relay 114 of a specific battery pack 11 to 16 among a plurality of battery packs 11 to 16 to the slave BMS.

In addition, the control module 101 may detect the cell in which a cell balancing is requested based on a plurality of received cell voltages, and transmit a signal for controlling the cell balancing to the slave BMS of the battery pack including the corresponding cell.

The control module 101 may determine whether the wireless communication failure has occurred on the basis of the signal received through the wireless communication module 102. A method for determining the wireless communication failure may be implemented by one of various known techniques. For example, if the wireless communication failure is maintained during the failure confirmation time, the control module 101 puts the master BMS 10 into the safety mode. Depending on the safety mode, the control module 101 generates the relay control signal to open the relays 17 and 18.

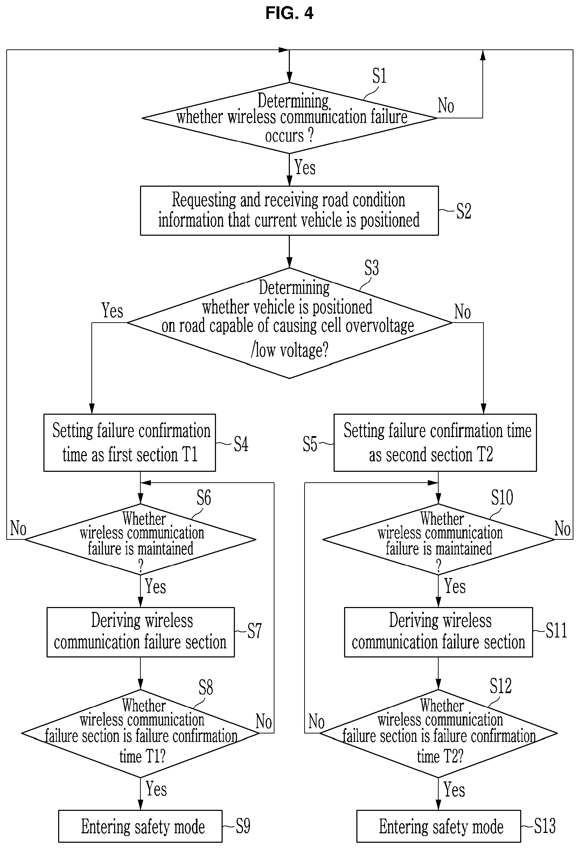

Hereinafter, a failure confirmation time control method according to an exemplary embodiment is described with reference to FIG. 4.

FIG. 4 is a view showing a failure confirmation time control method according to an exemplary embodiment.

The control module 101 determines whether a failure has occurred in the wireless communication between the master BMS 10 and at least one of a plurality of slave BMS 111, 121, 131, 141, 151, and 161 (S10). As the determination result of the step S1, if the wireless communication failure does not occur, the control module 101 may periodically repeat the step (S1).

As the determination result of the step (S1), if the wireless communication failure occurs, the control module 101 requests the road condition information where the vehicle is currently positioned from the electronic control unit ECU2 to receive the corresponding information (S2).

The control module 101 determines whether the over-voltage/low voltage of the cell may be caused on the road based on the road condition information where the vehicle is currently positioned (S3). For example, if the road condition information is any one of a high speed, an uphill, a downhill, etc., the control module 101 determines that the current position of the vehicle is located on the road capable of causing the over-voltage/low voltage.

As a result of the determination of the step (S3), if the current position of the vehicle is located on the road capable of causing the overvoltage/low voltage of the cell, the control module 101 sets the failure confirmation time as the first section T1 (S4). As a result of the determination of the step (S3), if the current position of the vehicle is not on the road capable of causing the overvoltage/low voltage of the cell, the control module 101 sets the failure confirmation time as the second section T2 (S5). The second section is longer than the first section.

Following the step (S4), the control module 101 determines whether the wireless communication failure is maintained (S6).

As a result of the determination of the step (S6), if the wireless communication failure is maintained, the control module 101 derives a wireless communication failure section from the time when the wireless communication failure occurs to the current time (S7). The control module 101 may count the passage of the time.

The control module 101 compares the wireless communication failure section with the failure confirmation time T1 predetermined in the step (S4) (S8).

As a result of the determination of the step (S8), if the wireless communication failure section reaches the failure confirmation time T1, the control module 101 enters the safety mode (S9). Depending on the safety mode, the control module 101 may open the relay.

As a result of the determination of the step (S8), if the wireless communication failure section does not reach the failure confirmation time T1, the control module 101 repeats from the step (S6).

As a result of the determination of the step (S6), if the wireless communication failure is not maintained, the control module 101 may periodically repeat the step (S1) again.

Following the step (S5), the control module 101 determines whether the wireless communication failure is maintained (S10).

As a result of the determination of the step (S10), if the wireless communication failure is maintained, the control module 101 derives a wireless communication failure section from the time when the wireless communication failure occurs to the current time (S11). The control module 101 may count the passage of the time.

The control module 101 compares the wireless communication failure section with the failure confirmation time T2 predetermined in the step (S5) (S12).

As a result of the determination of the step (S12), if the wireless communication failure section reaches the failure confirmation time T2, the control module 101 enters the safety mode (S13). Depending on the safety mode, the control module 101 may open the relay.

As a result of the determination of the step (S12), if the wireless communication failure section does not reach the failure confirmation time T2, the control module 101 repeats from the step (S10).

As a result of the determination of the step (S10), if the wireless communication failure is not maintained, the control module 101 may periodically repeat the step (S1) again.

As such, according to an exemplary embodiment, by differently controlling the failure confirmation time for determining whether the wireless communication failure occurs based on the current position of the vehicle, the stability and marketability of the battery system may be improved.

While this invention has been described in connection with what is
presently considered to be practical exemplary embodiments, it is to be understood that the invention is not limited to the disclosed embodiments. On the contrary, it is intended to cover various modifications and equivalent arrangements included within the scope of the appended claims.

## Claims

1. A management method of a battery system (1) including a plurality of battery packs (11-16), a plurality of slave battery management systems, BMSs, (111, 121, 131, 141, 151, and 161) and a master battery management system, BMS, (10) connected to the plurality of slave BMSs (111, 121, 131, 141, 151, and 161) by wireless communication, the method performed by the master BMS (10) and comprising:
determining (S1) whether a wireless communication failure occurs between the master BMS (10) and at least one of a plurality of slaves (111, 121, 131, 141, 151, and 161);
receiving (S2) road condition information where a vehicle equipped with the battery system is currently positioned if the wireless communication failure occurs;
determining (S3) whether the vehicle is on a road capable of causing a cell overvoltage/low voltage based on the road condition information;
setting (S4) a first failure confirmation time if the current position of the vehicle is on the road capable of causing the cell overvoltage/low voltage;
setting (S5) a second failure confirmation time if the current position of the vehicle is not located on the road capable of causing the cell overvoltage/low voltage; and
entering (S9, S13) a safety mode by opening a relay between the vehicle and the battery system (1) if a wireless communication failure section from the time when the wireless communication failure occurs to the current time reaches the first failure confirmation time or the second failure confirmation time,
wherein the second failure confirmation time is longer than the first failure confirmation time.

2. The battery management method of claim 1, wherein
the determining whether the vehicle is on the road capable of causing the cell overvoltage/low voltage based on the road condition information includes
determining that the current position of the vehicle is on the road capable of causing the cell overvoltage/low voltage when the road condition information is any one of a high speed, an uphill road, and a downhill road.

3. The battery management method of claim 1, further comprising
deriving the wireless communication failure section from the time when the wireless communication failure occurs to the current time.

4. The battery management method of claim 1, further comprising
determining whether the wireless communication failure is maintained if the wireless communication failure section does not reach the first failure confirmation time when the current position of the vehicle is on the road capable of causing the cell overvoltage/low voltage.

5. The battery management method of claim 1, further comprising
determining whether the wireless communication failure is maintained if the wireless communication failure section does not reach the second failure confirmation time when the current position of the vehicle is not positioned on the road capable of causing the cell overvoltage/low voltage.

6. A battery system (1) comprising:
a plurality of battery packs (11-16) and slave battery management systems, BMSs, (111, 121, 131, 141, 151, and 161);
a master battery management system, BMS, (10) connected to the slave BMSs (111, 121, 131, 141, 151, and 161) by wireless communication; and
at least one relay (17, 18) connected between the vehicle and the battery system (1),
wherein the master BMS (10), if a failure occurs in wireless communication with the slave BMSs (111, 121, 131, 141, 151, and 161), is configured to:
receive road condition information for which the vehicle is currently positioned,
determine whether the vehicle is on a road capable of causing a cell overvoltage/low voltage based on the road condition information,
set a first failure confirmation time if the current position of the vehicle is positioned on the road capable of causing the cell overvoltage/low voltage,
set a second failure confirmation time if the current position of the vehicle is not on the road capable of causing the cell overvoltage/low voltage, and
enter a safety mode by opening a relay between the vehicle and the battery system (1) if a wireless communication failure section from the time when the wireless communication failure occurs to the current time reaches the first failure confirmation time or the second failure confirmation time, and
wherein the second failure confirmation time is longer than the first failure confirmation time.

7. The battery system (1) of claim 6, wherein
the master BMS (10) is configured to determine that the current position of the vehicle is on the road capable of causing the cell overvoltage/low voltage when the road condition information is any one of a high speed, an uphill, or a downhill.

8. The battery system (1) of claim 6, wherein
the master BMS (10) is configured to derive a wireless communication failure section from the time when the wireless communication failure occurs to the current time.

9. The battery system (1) of claim 6, wherein
the master BMS (10) is configured to determine whether the wireless communication failure is maintained if the wireless communication failure section does not reach the first failure confirmation time when the current position of the vehicle is on the road capable of causing the cell overvoltage/low voltage.

10. The battery system (1) of claim 6, wherein
the master BMS (10) is configured to determine whether the wireless communication failure is maintained if the wireless communication failure section does not reach the first failure confirmation time when the current position of the vehicle is not on the road capable of causing the cell overvoltage/low voltage.

## Patentansprüche

1. Verwaltungsverfahren eines Batteriesystems (1), das eine Vielzahl von Batteriepacks (11-16), eine Vielzahl von Slave-Batteriemanagementsystemen, BMSs, (111, 121, 131, 141, 151 und 161) und ein Master-Batteriemanagementsystem, BMS, (10) umfasst, das durch drahtlose Kommunikation mit der Vielzahl von Slave-BMSs (111, 121, 131, 141, 151 und 161) verbunden ist, wobei das Verfahren durch das Master-BMS (10) durchgeführt wird und Folgendes umfasst:
Bestimmen (S1), ob ein Ausfall der drahtlosen Kommunikation zwischen dem Master-BMS (10) und mindestens einem aus einer Vielzahl von Slaves (111, 121, 131, 141, 151 und 161) auftritt;
Empfangen (S2) von Straßenbedingungsinformationen, wo ein mit dem Batteriesystem ausgestattetes Fahrzeug aktuell positioniert ist, wenn der Ausfall der drahtlosen Kommunikation auftritt;
Bestimmen (S3), ob sich das Fahrzeug auf einer Straße befindet, die in der Lage ist, eine Zellenüberspannung/-unterspannung zu verursachen, basierend auf den Straßenbedingungsinformationen;
Einstellen (S4) einer ersten Fehlerbestätigungszeit, wenn die aktuelle Position des Fahrzeugs sich auf der Straße befindet, die in der Lage ist, die Zellenüberspannung/- unterspannung zu verursachen;
Einstellen (S5) einer zweiten Fehlerbestätigungszeit, wenn die aktuelle Position des Fahrzeugs sich nicht auf der Straße befindet, die in der Lage ist, die Zellenüberspannung/-unterspannung zu verursachen;
und
Eintreten (S9, S13) in einen Sicherheitsmodus durch Öffnen eines Relais zwischen dem Fahrzeug und dem Batteriesystem (1), wenn ein Abschnitt des Ausfalls der drahtlosen Kommunikation von dem Zeitpunkt, zu dem der Ausfall der drahtlosen Kommunikation auftritt, bis zum aktuellen Zeitpunkt die erste Fehlerbestätigungszeit oder die zweite Fehlerbestätigungszeit erreicht,
wobei die zweite Fehlerbestätigungszeit länger als die erste Fehlerbestätigungszeit ist.

2. Batterieverwaltungsverfahren nach Anspruch 1, wobei
das Bestimmen, ob sich das Fahrzeug auf der Straße befindet, die in der Lage ist, die Zellenüberspannung/-unterspannung zu verursachen, basierend auf den Straßenbedingungsinformationen,
das Bestimmen einschließt, dass die aktuelle Position des Fahrzeugs sich auf der Straße befindet, die in der Lage ist, die Zellenüberspannung/-unterspannung zu verursachen, wenn die Straßenbedingungsinformationen eine von einer hohen Geschwindigkeit, einer ansteigenden Straße und einer abfallenden Straße sind.

3. Batterieverwaltungsverfahren nach Anspruch 1, ferner umfassend
das Ableiten des Abschnitts des Ausfalls der drahtlosen Kommunikation von dem Zeitpunkt, zu dem der Ausfall der drahtlosen Kommunikation auftritt, bis zum aktuellen Zeitpunkt.

4. Batterieverwaltungsverfahren nach Anspruch 1, ferner umfassend
das Bestimmen, ob der Ausfall der drahtlosen Kommunikation aufrechterhalten wird, wenn der Abschnitt des Ausfalls der drahtlosen Kommunikation die erste Fehlerbestätigungszeit nicht erreicht, wenn die aktuelle Position des Fahrzeugs sich auf der Straße befindet, die in der Lage ist, die Zellenüberspannung/-unterspannung zu verursachen.

5. Batterieverwaltungsverfahren nach Anspruch 1, ferner umfassend
das Bestimmen, ob der Ausfall der drahtlosen Kommunikation aufrechterhalten wird, wenn der Abschnitt des Ausfalls der drahtlosen Kommunikation die zweite Fehlerbestätigungszeit nicht erreicht, wenn die aktuelle Position des Fahrzeugs nicht auf der Straße positioniert ist, die in der Lage ist, die Zellenüberspannung/-unterspannung zu verursachen.

6. Batteriesystem (1), umfassend:
eine Vielzahl von Batteriepacks (11-16) und Slave-Batteriemanagementsystemen, BMSs, (111, 121, 131, 141, 151 und 161);
ein Master-Batteriemanagementsystem, BMS, (10), das durch drahtlose Kommunikation mit den Slave-BMSs (111, 121, 131, 141, 151 und 161) verbunden ist; und
mindestens ein Relais (17, 18), das zwischen dem Fahrzeug und dem Batteriesystem (1) verbunden ist,
wobei das Master-BMS (10), wenn ein Fehler in der drahtlosen Kommunikation mit den Slave-BMSs (111, 121, 131, 141, 151 und 161) auftritt, konfiguriert ist, um:
Straßenbedingungsinformationen zu empfangen, für die das Fahrzeug aktuell positioniert ist,
zu bestimmen, ob sich das Fahrzeug auf einer Straße befindet, die in der Lage ist, eine Zellenüberspannung/-unterspannung zu verursachen, basierend auf den Straßenbedingungsinformationen,
eine erste Fehlerbestätigungszeit einzustellen, wenn die aktuelle Position des Fahrzeugs auf der Straße positioniert ist, die in der Lage ist, die Zellenüberspannung/- unterspannung zu verursachen,
eine zweite Fehlerbestätigungszeit einzustellen, wenn die aktuelle Position des Fahrzeugs nicht auf der Straße ist, die in der Lage ist, die Zellenüberspannung/- unterspannung zu verursachen, und
in einen Sicherheitsmodus einzutreten durch Öffnen eines Relais zwischen dem Fahrzeug und dem Batteriesystem (1), wenn ein Abschnitt des Ausfalls der drahtlosen Kommunikation von dem Zeitpunkt, zu dem der Ausfall der drahtlosen Kommunikation auftritt, bis zum aktuellen Zeitpunkt die erste Fehlerbestätigungszeit oder die zweite Fehlerbestätigungszeit erreicht, und
wobei die zweite Fehlerbestätigungszeit länger als die erste Fehlerbestätigungszeit ist.

7. Batteriesystem (1) nach Anspruch 6, wobei
das Master-BMS (10) konfiguriert ist, um zu bestimmen, dass die aktuelle Position des Fahrzeugs sich auf der Straße befindet, die in der Lage ist, die Zellenüberspannung/- unterspannung zu verursachen, wenn die Straßenbedingungsinformationen eine von einer hohen Geschwindigkeit, einer ansteigenden Straße oder einer abfallenden Straße sind.

8. Batteriesystem (1) nach Anspruch 6, wobei
das Master-BMS (10) konfiguriert ist, um einen Abschnitt des Ausfalls der drahtlosen Kommunikation von dem Zeitpunkt, zu dem der Ausfall der drahtlosen Kommunikation auftritt, bis zum aktuellen Zeitpunkt abzuleiten.

9. Batteriesystem (1) nach Anspruch 6, wobei
das Master-BMS (10) konfiguriert ist, um zu bestimmen, ob der Ausfall der drahtlosen Kommunikation aufrechterhalten wird, wenn der Abschnitt des Ausfalls der drahtlosen Kommunikation die erste Fehlerbestätigungszeit nicht erreicht, wenn die aktuelle Position des Fahrzeugs sich auf der Straße befindet, die in der Lage ist, die Zellenüberspannung/-unterspannung zu verursachen.

10. Batteriesystem (1) nach Anspruch 6, wobei
das Master-BMS (10) konfiguriert ist, um zu bestimmen, ob der Ausfall der drahtlosen Kommunikation aufrechterhalten wird, wenn der Abschnitt des Ausfalls der drahtlosen Kommunikation die erste Fehlerbestätigungszeit nicht erreicht, wenn die aktuelle Position des Fahrzeugs nicht auf der Straße ist, die in der Lage ist, die Zellenüberspannung/-unterspannung zu verursachen.

## Revendications

1. Procédé de gestion d'un système de batterie (1) incluant une pluralité de blocs-batteries (11-16), une pluralité de systèmes de gestion de batterie esclaves, BMS, (111, 121, 131, 141, 151 et 161) et un système de gestion de batterie maître, BMS, (10) connecté à la pluralité de BMS esclaves (111, 121, 131, 141, 151 et 161) par communication sans fil, le procédé étant exécuté par le BMS maître (10) et comprenant :
la détermination (S1) du fait qu'une défaillance de communication sans fil se produit ou non entre le BMS maître (10) et au moins un d'une pluralité d'esclaves (111, 121, 131, 141, 151 et 161) ;
la réception (S2) d'informations sur l'état de la route où un véhicule équipé du système de batterie est actuellement positionné si la défaillance de communication sans fil se produit ;
la détermination (S3) du fait que le véhicule se trouve ou non sur une route capable de provoquer une surtension/sous-tension de cellule sur la base des informations sur l'état de la route ;
le réglage (S4) d'un premier temps de confirmation de défaillance si la position actuelle du véhicule est sur la route capable de provoquer la surtension/sous-tension de cellule ;
le réglage (S5) d'un second temps de confirmation de défaillance si la position actuelle du véhicule n'est pas située sur la route capable de provoquer la surtension/soustension de cellule ;
et
l'entrée (S9, S13) dans un mode de sécurité en ouvrant un relais entre le véhicule et le système de batterie (1) si une section de défaillance de communication sans fil depuis le moment où la défaillance de communication sans fil se produit jusqu'au moment présent atteint le premier temps de confirmation de défaillance ou le second temps de confirmation de défaillance,
dans lequel le second temps de confirmation de défaillance est plus long que le premier temps de confirmation de défaillance.

2. Procédé de gestion de batterie selon la revendication 1, dans lequel
la détermination si le véhicule se trouve sur la route capable de provoquer la surtension/sous-tension de cellule sur la base des informations sur l'état de la route inclut
la détermination que la position actuelle du véhicule est sur la route capable de provoquer la surtension/sous-tension de cellule lorsque les informations sur l'état de la route sont l'une quelconque parmi une vitesse élevée, une route en montée et une route en descente.

3. Procédé de gestion de batterie selon la revendication 1, comprenant en outre
la déduction de la section de défaillance de communication sans fil depuis le moment où la défaillance de communication sans fil se produit jusqu'au moment présent.

4. Procédé de gestion de batterie selon la revendication 1, comprenant en outre
la détermination si la défaillance de communication sans fil est maintenue si la section de défaillance de communication sans fil n'atteint pas le premier temps de confirmation de défaillance lorsque la position actuelle du véhicule est sur la route capable de provoquer la surtension/sous-tension de cellule.

5. Procédé de gestion de batterie selon la revendication 1, comprenant en outre
la détermination si la défaillance de communication sans fil est maintenue si la section de défaillance de communication sans fil n'atteint pas le second temps de confirmation de défaillance lorsque la position actuelle du véhicule n'est pas positionnée sur la route capable de provoquer la surtension/sous-tension de cellule.

6. Système de batterie (1) comprenant :
une pluralité de blocs-batteries (11-16) et de systèmes de gestion de batterie esclaves, BMS, (111, 121, 131, 141, 151 et 161) ;
un système de gestion de batterie maître, BMS, (10) connecté aux BMS esclaves (111, 121, 131, 141, 151 et 161) par communication sans fil ; et
au moins un relais (17, 18) connecté entre le véhicule et le système de batterie (1),
dans lequel le BMS maître (10), si une défaillance se produit dans la communication sans fil avec les BMS esclaves (111, 121, 131, 141, 151 et 161), est configuré pour :
recevoir des informations sur l'état de la route pour laquelle le véhicule est actuellement positionné,
déterminer si le véhicule se trouve sur une route capable de provoquer une surtension/sous-tension de cellule sur la base des informations sur l'état de la route,
régler un premier temps de confirmation de défaillance si la position actuelle du véhicule est positionnée sur la route capable de provoquer la surtension/sous-tension de cellule,
régler un second temps de confirmation de défaillance si la position actuelle du véhicule n'est pas sur la route capable de provoquer la surtension/sous-tension de cellule, et
entrer dans un mode de sécurité en ouvrant un relais entre le véhicule et le système de batterie (1) si une section de défaillance de communication sans fil depuis le moment où la défaillance de communication sans fil se produit jusqu'au moment présent atteint le premier temps de confirmation de défaillance ou le second temps de confirmation de défaillance, et
dans lequel le second temps de confirmation de défaillance est plus long que le premier temps de confirmation de défaillance.

7. Le système de batterie (1) selon la revendication 6, dans lequel
le BMS maître (10) est configuré pour déterminer que la position actuelle du véhicule est sur la route capable de provoquer la surtension/sous-tension de cellule lorsque les informations sur l'état de la route sont l'une quelconque parmi une vitesse élevée, une route en montée ou une route en descente.

8. Le système de batterie (1) selon la revendication 6, dans lequel
le BMS maître (10) est configuré pour déduire une section de défaillance de communication sans fil depuis le moment où la défaillance de communication sans fil se produit jusqu'au moment présent.

9. Le système de batterie (1) selon la revendication 6, dans lequel
le BMS maître (10) est configuré pour déterminer si la défaillance de communication sans fil est maintenue si la section de défaillance de communication sans fil n'atteint pas le premier temps de confirmation de défaillance lorsque la position actuelle du véhicule est sur la route capable de provoquer la surtension/sous-tension de cellule.

10. Le système de batterie (1) selon la revendication 6, dans lequel
le BMS maître (10) est configuré pour déterminer si la défaillance de communication sans fil est maintenue si la section de défaillance de communication sans fil n'atteint pas le premier temps de confirmation de défaillance lorsque la position actuelle du véhicule n'est pas sur la route capable de provoquer la surtension/sous-tension de cellule.
